# EUROPÄISCHE PATENTSCHRIFT

(11) **EP 3 785 991 B1**
(45) Veröffentlichungstag und Bekanntmachung des Hinweises auf die Patenterteilung: **23.03.2022**
(21) Anmeldenummer: 20190759.9
(22) Anmeldetag: 12.08.2020
(51) Int. Cl.: B60Q 1/076

(54) **KRAFTFAHRZEUGSCHEINWERFER MIT ELEKTROMOTORISCH VERSTELLBARER ABSTRAHLRICHTUNG**
MOTOR VEHICLE HEADLAMP WHOSE LIGHT BEAM ORIENTATION CAN BE ADJUSTED BY MEANS OF ELECTRIC MOTORS
PHARE DE VÉHICULE AUTOMOBILE DONT L'ORIENTATION DU FAISCEAU EST RÉGLABLE AU MOYEN DE MOTEURS ÉLECTRIQUES

(30) Priorität: 27.08.2019 DE 102019122927
(43) Veröffentlichungstag der Anmeldung: 03.03.2021
(73) Patentinhaber: Marelli Automotive Lighting Reutlingen (Germany) GmbH, 72762 Reutlingen (DE)
(72) Erfinder: Foster, Henry, 74395 Mundelsheim (DE)
(74) Vertreter: DREISS Patentanwälte PartG mbB

(56) Entgegenhaltungen:
- EP-A1- 1 260 410
- EP-A1- 1 270 323
- EP-A1- 1 772 311
- DE-A1-102014 007 865
- FR-A1- 2 956 895
- FR-A1- 2 981 431
- US-A1- 2015 009 699

## Beschreibung

Die vorliegende Erfindung betrifft einen Kraftfahrzeugscheinwerfer mit den Merkmalen des Oberbegriffs des Anspruchs 1. Ein solcher Kraftfahrzeugscheinwerfer ist aus den Druckschrift EP 1 772 311 A1 bekannt. Aus der US 2015/0099699 A1 ist ein Scheinwerfer mit in zwei Raumrichtungen schwenkbaren Lichtmodulen bekannt. Weiterer technischer Hintergrund ist aus den Druckschriften DE 10 2014 007 865 A1, EP 1 260 410 A1, EP 1 270 323 A1, FR 2 981 431 A1 und FR 2 956 895 A1 bekannt. Per se bekannt ist auch ein Kraftfahrzeugscheinwerfer mit einem Lichtmodul, das schwenkbar im Kraftfahrzeugscheinwerfer gelagert ist. Eine Schwenkbewegung des Lichtmoduls wird durch einen Linearschrittmotor angetrieben, der eine mit dem Lichtmodul gekoppelte Stellstange aufweist. Aus der DE 102 05 215 A1 ist ein Kraftfahrzeugscheinwerfer bekannt, bei dem eine Leuchtweitenregelung mit zwei Linearschrittmotoren erfolgt, die direkt an einem Halterahmen des Kraftfahrzeugscheinwerfers angreifen.

Linearschrittmotoren führen eine lineare Stellbewegung aus, deren Verstellweite sich als Produkt der Schrittzahl und der Schrittweite ergibt. Die Zahl der Schritte wird dabei von einer Steuereinrichtung vorgegeben. Die Zahl der tatsächlich ausgeführten Schritte kann von der Zahl der vorgegebenen Schritte abweichen, weil zum Beispiel Schritte nicht ausgeführt werden, bei denen die aufzubringende Verstellkraft eine maximal zulässige Kraft überschreitet. Die Steuereinrichtung geht dagegen davon aus, dass die vorgegebene Schrittzahl auch tatsächlich ausgeführt wird. Als Folge kann es zu Abweichungen von Iststellungen des Linearschrittmotors und damit des Lichtmoduls von deren jeweils durch die Schrittzahlvorgabe ergebenden Sollstellungen kommen.

Es gibt Lichtmodule, welche Lichtverteilungen mit einer gemeinsamen Hell-Dunkel-Grenze erzeugen sollen. Wenn die Leuchtweite solcher Lichtmodule mit Lichtmodulindividuellen Linearschrittmotoren verstellt wird, können die genannten Abweichungen der Sollstellungen von den Iststellungen der Linearschrittmotoren dazu führen, dass die Lichtmodule Lichtverteilungen mit von Lichtmodul zu Lichtmodul verschiedenen Hell-Dunkel-Grenzen erzeugen, was unerwünscht ist.

Dieser unerwünschte Effekt wurde bisher dadurch vermieden, dass die Leuchtweite von Lichtmodulen eines Scheinwerfers, die Lichtverteilungen mit gemeinsamer Hell-Dunkel-Grenze erzeugen sollen, mit ein und demselben Linearschrittmotor verstellt wurde.

Die Zahl und träge Masse von Lichtmodulen eines Scheinwerfers, die mit ein und demselben Linearschrittmotor bewegt werden, hat in den letzten Jahren zugenommen, ohne dass die Leistungsfähigkeit und Schüttelfestigkeit der verwendeten Linearschrittmotoren im gleichen Maßstab zugenommen hätte. Die Lichtmodule sind in einem Halterahmen montiert, und die Halterahmen werden mit der Zeit größer und schwerer, da sie mehr Lichtmodule mit unter Umständen schwereren Linsen und Kühlkörpern aufnehmen müssen. Weitere Anforderungen an die Stellkräfte der Linearschrittmotoren ergeben sich unter Umständen aus einer ungünstigen Lage der Schwenkachse (großer Abstand zwischen Schwenkachse und Schwerpunkt). Die Schüttelfestigkeit, also die Standfestigkeit gegenüber im Fahrbetrieb von Kraftfahrzeugen auftretenden Schüttelbelastungen, ist eine wesentliche Anforderung an sämtliche Kraftfahrzeugkomponenten und so auch an die Linearschrittmotoren. Diese Anforderung erfordert die Einhaltung eines Sicherheitsabstands zwischen der Last-Trägheit und der Schüttelfestigkeit.

Ein Problem der per se bekannten Lösung besteht darin, dass ein vergleichsweise großer, einzelner Linearschrittmotor, dessen Leistungsfähigkeit der Summe der Leistungsfähigkeiten von mehreren vergleichsweise kleineren (Standard-)Linearschrittmotoren entspricht und dessen Schüttelfestigkeit den gestiegenen Anforderungen entspricht, auf dem Markt nicht oder jedenfalls nicht zu konkurrenzfähigen Preisen erhältlich ist.

Eine weiteres Problem der bekannten Lösung der Verwendung eines einzelnen Linearschrittmotors besteht darin, dass in der Praxis ein ausreichend großer Sicherheitsabstand zwischen tatsächlich auftretenden Verstellkräften und einer maximal zulässigen Verstellkraft des Linearschrittmotors eingehalten werden muss, weil sonst ein nicht detektierter dauerhafter Schrittverlust entstehen kann, der die optischen Eigenschaften und damit eine regelkonforme Funktionsfähigkeit des Kraftfahrzeugscheinwerfers beeinträchtigen kann. Dieser Effekt kann sowohl bei einer gemeinsam durch einen Linearschrittmotor erfolgenden Verstellung mehrerer Lichtmodule als auch bei einer Verstellung eines einzelnen, schweren Lichtmoduls auftreten.

Linearschrittmotoren können nicht mechanisch starr miteinander gekoppelt werden, da die Gefahr besteht, dass sie sich gegenseitig behindern würden. Das gilt auch, wenn sie seitens des Linearschrittmotortreibers im Steuergerät elektrisch in Serienschaltung oder in Parallelschaltung betrieben werden. Ein Verbund starr miteinander gekoppelter Linearschrittmotoren könnte zwar hohe Stellkräfte erzeugen, würde aber die Gefahr einer Selbstblockade mit sich bringen, wenn die beteiligten Linearschrittmotoren nicht völlig synchron und phasengleich laufen.

Vor diesem Hintergrund besteht die Aufgabe der Erfindung in der Angabe eines Kraftfahrzeugscheinwerfers, der mit einer Linearschrittmotor-getriebenen Verstellung der Stellung von wenigstens einem Lichtmodul des Kraftfahrzeugscheinwerfers arbeitet, bei der höhere Stellkräfte und eine größere Schüttelfestigkeit erzielt werden als ein einzelner Standard-Linearschrittmotor aufbringt, ohne dafür die Gefahr einer Selbstblockade in Kauf nehmen zu müssen. Die Lösung soll außerdem zu konkurrenzfähigen Kosten verwirklichbar sein.

Diese Aufgabe wird mit den Merkmalen des Anspruchs 1 gelöst. Der erfindungsgemäße Kraftfahrzeugscheinwerfer weist unter anderem einen ersten Linearschrittmotor, einen zweiten Linearschrittmotor, eine Koppelstange und eine Summenstellstange auf. Der erste Linearschrittmotor weist eine erste Stellstange auf, die ein schrittmotorseitiges erstes Ende und ein lichtmodulseitiges erstes Ende aufweist. Der zweite Linearschrittmotor weist eine zweite Stellstange auf, die ein schrittmotorseitiges zweites Ende und ein lichtmodulseitiges zweites Ende aufweist. Die Koppelstange weist ein erstes Ende, ein zweites Ende und ein zwischen dem ersten Ende und dem zweiten Ende liegendes Drehlager auf. Das erste lichtmodulseitige Ende der ersten Stellstange ist um eine Achse senkrecht zur Drehachse des Lichtmoduls drehbeweglich mit dem ersten Ende der Koppelstange verbunden. Das zweite lichtmodulseitige Ende der zweiten Stellstange ist um eine Achse senkrecht zur Drehachse des Lichtmoduls drehbeweglich mit dem zweiten Ende der Koppelstange verbunden. Ein koppelstangenseitiges Ende der Summenstellstange ist um eine Achse senkrecht zur Drehachse des Lichtmoduls drehbeweglich mit dem Drehlager der Koppelstange verbunden. Ein lichtmodulseitiges Ende der Summenstellstange ist mit dem Lichtmodul verbunden.

Durch diese Merkmale verbindet die Koppelstange die beiden Stellstangen nach Art einer Wippe. Dadurch, dass die Summenstellstange an den Drehpunkt der Wippe angelenkt ist, überträgt sie die Linearbewegung des Drehlagers auf das wenigstens eine Lichtmodul über, das darauf mit einer Schwenkbewegung reagiert. Ggf. auftretende Unterschiede in den Bewegungen der Stellstangen der Linearschrittmotoren führen nur zu einer Schrägstellung der Wippe. Eine gegenseitige Blockade der Linearschrittmotoren findet nicht statt.

Eine bevorzugte Ausgestaltung zeichnet sich dadurch aus, dass das lichtmodulseitige Ende der Summenstellstange mit genau einem schwenkbaren Lichtmodul verbunden ist. Bevorzugt ist auch, dass das lichtmodulseitige Ende der Summenstellstange mit wenigstens zwei Lichtmodulen verbunden ist.

Weiter ist bevorzugt, dass das lichtmodulseitige Ende der Summenstellstange mit wenigstens drei Lichtmodulen verbunden ist.

Eine weitere bevorzugte Ausgestaltung zeichnet sich dadurch aus, dass die Koppelstange eine Längenänderungen ausgleichende Lagerung aufweist.

Bevorzugt ist auch, dass die Längenänderungen ausgleichende Lagerung ein Schiebestück aufweist.

Weiter ist bevorzugt, dass eine elektrische Beschaltung der Linearschrittmotoren dazu eingerichtet sind, die Linearschrittmotoren mit denselben elektrischen Signalen anzusteuern.

Eine weitere bevorzugte Ausgestaltung zeichnet sich dadurch aus, dass die Summenstellstange in einer Linearführung in Längsrichtung beweglich gehalten wird.

Bevorzugt ist auch, dass jeder der wenigstens zwei Linearschrittmotoren von jeweils einem schrittmotorindividuellen Linearschrittmotortreiber angesteuert wird.

Weiter ist bevorzugt, dass wenigstens zwei der wenigstens zwei Linearschrittmotoren von nur einem Linearschrittmotortreiber angesteuert werden, wobei die wenigstens zwei Linearschrittmotoren elektrisch in Reihe oder parallel geschaltet sind.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert.

Dabei zeigen, jeweils in schematischer Form:
- Figur 1: einen Vertikalschnitt durch einen Kraftfahrzeugscheinwerfer;
- Figur 2: einen Horizontalschnitt durch einen bekannten Kraftfahrzeugscheinwerfer;
- Figur 3: eine Anordnung von zwei Lichtmodulen und zwei Linearschrittmotoren eines Ausführungsbeispiels eines erfindungsgemäßen Scheinwerfers;
- Figur 4: eine Anordnung aus Koppelstange und Summenstellstange bei einer Differenz der Stellbewegungen beider Linearschrittmotoren;
- Figur 5: eine Ausgestaltung einer Längenänderungen ausgleichenden Lagerung für ein Ende der Koppelstange und der zugehörigen Stellstange;
- Figur 6: eine alternative Ausgestaltung einer Längenänderungen ausgleichenden Lagerung, die ein Schiebestück aufweist;
- Figur 7: eine Ausgestaltung, bei der die Summenstellstange durch eine Linearführung geführt wird;
- Figur 8: eine Alternative, bei der das lichtmodulseitige Ende der Summenstellstange mit genau einem schwenkbaren Lichtmodul verbunden ist;
- Figur 9: eine elektrische Beschaltung von n = 2 Linearschrittmotoren, die dazu eingerichtet ist, die Linearschrittmotoren mit denselben elektrischen Signalen anzusteuern;
- Figur 10: zeigt eine Ausgestaltung, bei der n Linearschrittmotoren von nur einem Linearschrittmotortreiber angesteuert werden, wobei die n Linearschrittmotoren elektrisch in Reihe geschaltet sind; und
- Figur 11: eine Ausgestaltung, bei der n Linearschrittmotoren von nur einem Linearschrittmotortreiber angesteuert werden, wobei die n Linearschrittmotoren elektrisch parallel geschaltet sind.

Dabei bezeichnen gleiche Bezugszeichen jeweils gleiche oder zumindest funktionsgleiche Elemente.

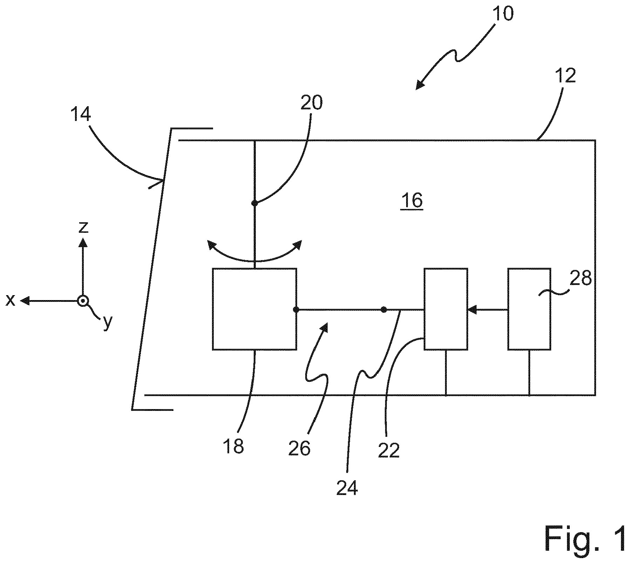

Im Einzelnen zeigt die Figur 1 einen Schnitt durch einen Kraftfahrzeugscheinwerfer 10. Der Kraftfahrzeugscheinwerfer 10 weist ein Gehäuse 12 auf, das dazu eingerichtet ist, starr mit einer Karosserie eines Kraftfahrzeugs verbunden zu werden. Eine Lichtaustrittsöffnung des Gehäuses 12 wird durch eine transparente Abdeckscheibe 14 abgedeckt. Die Abdeckscheibe und das Gehäuse umschließen gemeinsam einen Innenraum 16 des Kraftfahrzeugscheinwerfers 10. Das Gehäuse 12 kann als offene Rahmenstruktur verwirklicht sein. In diesem Fall übernimmt die Karosserieumgebung zusammen mit der Abdeckscheibe 14 eine den Innenraum 16 gegen äußere Einflüsse schützende und abdichtende Funktion.

Im Innenraum 16 des Kraftfahrzeugscheinwerfers 10 ist ein Lichtmodul 18 angeordnet, das dazu eingerichtet ist, allein oder in Verbindung mit weiteren im Innenraum 16 angeordneten Lichtmodulen eine regelkonforme Scheinwerferlichtverteilung zu erzeugen. Das Lichtmodul 18 strahlt Licht in einen in Fahrtrichtung des Kraftfahrzeuges vor dem Kraftfahrzeug liegenden Raum ab. Die Hauptabstrahlrichtung entspricht dabei der Fahrtrichtung, die bei einer Geradeausfahrt der Richtung x der Längsachse des Kraftfahrzeugs entspricht. Die y-Richtung entspricht der Richtung einer Querachse und die z-Richtung entspricht der Richtung einer Hochachse des Kraftfahrzeugs. Die Schnittebene der Figur 1 bildet damit einen zur Hauptabstrahlrichtung x parallelen Vertikalschnitt. Das Lichtmodul ist um eine Drehachse 20 in der Schnittebene schwenkbar in dem Gehäuse 12 aufgehängt. Die Drehachse liegt z.B. parallel zu y-Richtung, so dass die Drehachse in der Figur 1 in Folge ihrer Projektion in die x-z-Ebene als Drehpunkt erscheint. Die Schwenkbewegung des Lichtmoduls 18 ist von einem Linearschrittmotor 22 antreibbar, der starr mit dem Gehäuse 12 verbunden ist und der eine linear bewegliche Stellstange 24 aufweist, die über eine Stellstangenmechanik 26 mit dem Lichtmodul 18 verbunden ist. Der Linearschrittmotor 22 wird von einem Steuergerät 28 gesteuert, das seinerseits auf Lichtanforderungen eines Fahrers des Kraftfahrzeugs oder eines übergeordneten Steuergeräts des Kraftfahrzeugs reagiert. Eine lineare Stellbewegung der Stellstange 24 wirkt über die Stellstangenmechanik 26 so auf das Lichtmodul 18 ein, dass dieses eine Schwenkbewegung um die Drehachse 20 ausführt. Eine solche Schwenkbewegung ist für eine Leuchtweitenregelung typisch. Die Erfindung ist nicht auf die Verwirklichung einer Leuchtweitenregelung (Schwenkachse parallel zur y-Richtung) beschränkt und kann zum Beispiel auch für eine Kurvenlichtfunktion (Schwenkachse parallel zur z-Richtung) verwendet werden.

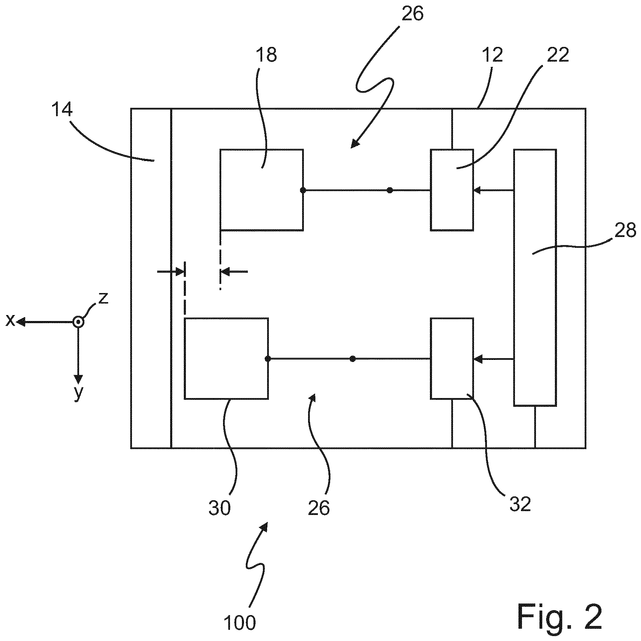

Figur 2 zeigt einen Horizontalschnitt durch einen bekannten Kraftfahrzeugscheinwerfer 100, also einen Schnitt, der parallel zur x-y-Ebene liegt. Der bekannte Kraftfahrzeugscheinwerfer 100 weist zwei Lichtmodule 18, 30 auf, von denen jedes so aufgehängt und angetrieben wird, wie es mit Bezug auf die Figur 1 für das Lichtmodul 18 erläutert worden ist. Die beiden Lichtmodule 18, 30 sollen Lichtmodule sein, die zusammen eine Lichtverteilung mit einer gemeinsamen Hell-Dunkel-Grenze bilden. Das eine Lichtmodul 18 ist zum Beispiel ein Abblendlichtmodul, das eine breite Grundlichtverteilung erzeugt, und das andere Lichtmodul 30 ist zum Beispiel ein Lichtmodul, das einen schmaleren Abblendlichtspot erzeugt. Jedes der beiden Lichtmodule 18, 30 wird durch einen lichtmodulindividuellen Linearschrittmotor 22, 32 angetrieben. Die Linearschrittmotoren 22, 32 unterscheiden sich nicht voneinander, und die Stellstangenmechaniken 26 sind auch für beide Lichtmodule 18, 30 gleich. Darüber hinaus werden beide Linearschrittmotoren 22, 32 vom Steuergerät 28 mit gleichen Signalen angesteuert, so dass die Schwenkbewegung der beiden Lichtmodule 18, 30 synchron und mit gleicher Phase erfolgenden sollte. Durch unerwünschte Schrittzahlverluste bei der Steuerung der Linearschrittmotoren 22, 32 kann es zu der in der Figur 2 dargestellten Situation kommen, dass die Stellstangen der Linearschrittmotoren 22, 32 unterschiedlich weit ausgefahren sind, was sich in einer Störung der Lichtverteilung abbildet.

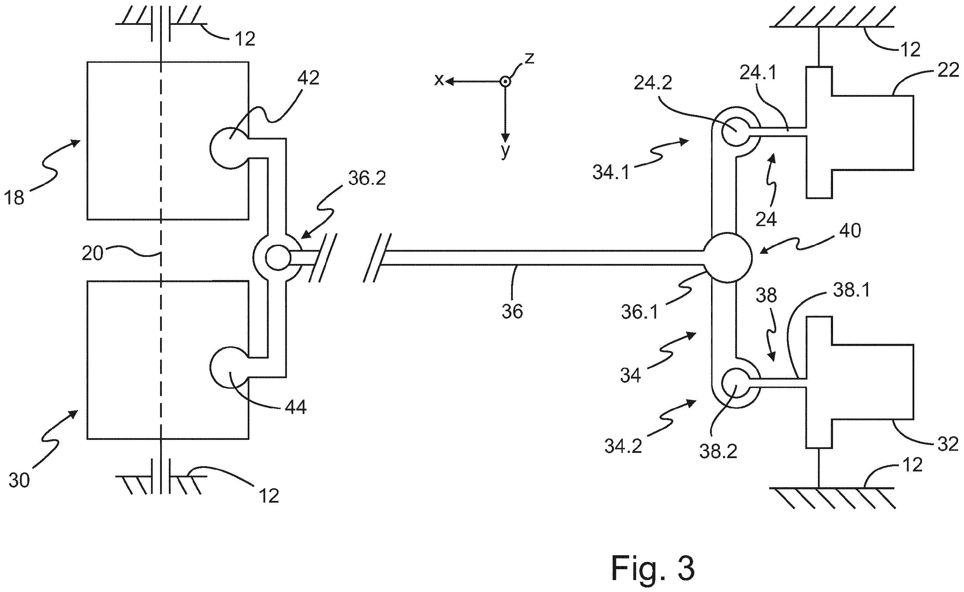

Figur 3 zeigt eine Anordnung von zwei Lichtmodulen 18, 30 und zwei Linearschrittmotoren 22, 32 und einer die beiden Lichtmodule 18, 30 und die beiden Linearschrittmotoren 22, 32 mechanisch miteinander koppelnden Stellstangenmechanik 26. Diese Anordnung bildet in Kombination mit dem Gehäuse 12 und der transparenten Abdeckscheibe 14 ein Ausführungsbeispiel eines erfindungsgemäßen Kraftfahrzeugscheinwerfers 10.

Ein solcher Kraftfahrzeugscheinwerfer 10 weist neben dem ersten Linearschrittmotor 22 und dem zweiten Linearschrittmotor 32 eine Koppelstange 34 und eine Summenstellstange 36 auf. Der erste Linearschrittmotor 22 weist eine erste Stellstange 24 auf, die ein schrittmotorseitiges erstes Ende 24.1 und ein lichtmodulseitiges erstes Ende 24.2 aufweist. Der zweite Linearschrittmotor 32 weist eine zweite Stellstange 38 auf, die ein schrittmotorseitiges zweites Ende 38.1 und ein lichtmodulseitiges zweites Ende 38.2 aufweist. Die Koppelstange 34 weist ein erstes Ende 34.1, ein zweites Ende 34.2 und ein zwischen dem ersten Ende 34.1 und dem zweiten Ende 34.2 liegendes Drehlager 40 auf. Das erste lichtmodulseitige Ende 24.2 der ersten Stellstange 24 ist drehbeweglich mit dem ersten Ende 34.1 der Koppelstange 34 verbunden. Das zweite lichtmodulseitige Ende 38.2 der zweiten Stellstange 38 ist drehbeweglich mit dem zweiten Ende 34.2 der Koppelstange 34 verbunden. Ein koppelstangenseitiges Ende 36.1 der Summenstellstange 36 ist drehbeweglich mit dem Drehlager 40 der Koppelstange 34 verbunden. Ein lichtmodulseitiges Ende 36.2 der Summenstellstange 36 ist mit den Lichtmodulen 18, 30 verbunden.

Bei einer gleichphasig-synchronen Stellbewegung der Stellstangen 24, 38 beider Linearschrittmotoren 22, 32 addieren sich die die Stellkräfte beider Linearschrittmotoren 22, 32. Die Drehmomente, die sich aus dem Zusammenwirken der Stellkräfte mit den Hebelarmen der Koppelstange 34 mit dem Drehlager 40 der Koppelstange 34 als möglichem Drehpunkt ergeben, kompensieren sich.

Als Folge bewegt sich die Summenstellstange 36 mit der gleichen Geschwindigkeit und um die gleiche Wegstrecke wie jede einzelne der Stellstangen 24, 38. Die Summenstellstange 36 weist an ihrem lichtmodulseitigen Ende 36.2 zwei symmetrische Zweige auf, von denen jeder mit einem Gelenk 42, 44 an jeweils ein Lichtmodul 18, 30 angekoppelt ist. Die Gelenke 42, 44 sind so ausgeführt, dass sie eine Schwenkbewegung in zur x-z-Ebene parallelen Ebenen erlauben, wie es auch unter Bezug auf die Figur 1 erläutert worden ist. Durch die Addition der Stellkräfte kann auch ein schwerer und träger Verbund mehrerer Lichtmodule geschwenkt werden.

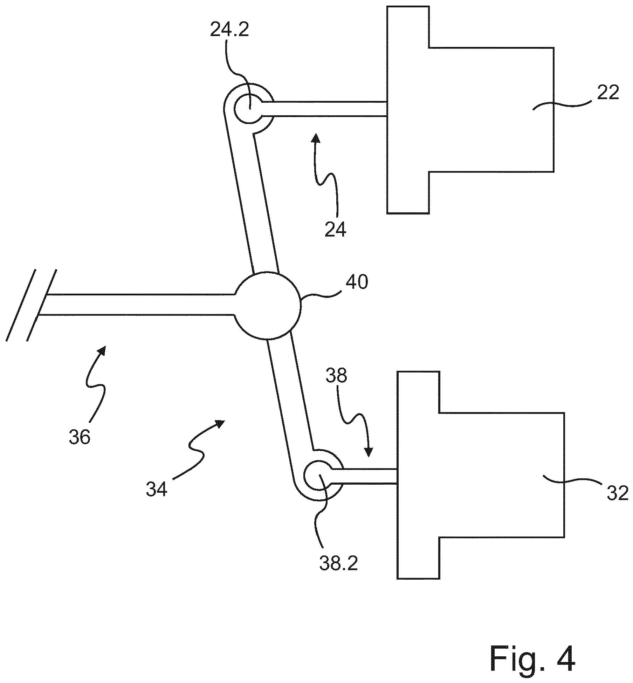

Figur 4 veranschaulicht das Verhalten der Anordnung aus Koppelstange 34 und Summenstellstange 36 für den Fall, dass die Stellbewegung des ersten Linearschrittmotors 22 von der Stellbewegung des zweiten Linearschrittmotors 32 abweicht. Bei einer solchen Abweichung der Stellbewegung des ersten Linearschrittmotors 22 von der Stellbewegung des zweiten Linearschrittmotors 32 wirkt sich vorteilhaft aus, dass das erste lichtmodulseitige Ende 24.2 der ersten Stellstange 24 drehbeweglich mit dem ersten Ende 34.1 der Koppelstange 34 verbunden ist und dass das zweite lichtmodulseitige Ende 38.2 der zweiten Stellstange 38 drehbeweglich mit dem zweiten Ende 34.2 der Koppelstange 34 verbunden ist. Wenn zum Beispiel die erste Stellstange 24 um m Schritte ausfährt, bevor die zweite Stellstange 38 auszufahren beginnt, dreht sich die Koppelstange 34 um ihr zweites Ende 34.2 herum solange, bis auch die zweite Stellstange 38 mit dem Ausfahren beginnt. Bis zu diesem Zeitpunkt stützt sich die Koppelstange 34 wie ein einseitiger Hebel an der noch nicht ausfahrenden zweiten Stellstange 38 ab. Die Summenstellstange 36 stützt sich an dem Drehlager 40 der Koppelstange 34 ab und führt eine Stellbewegung aus, die sich über ihre zwei zueinander symmetrischen Zweige in eine synchron und phasengleich erfolgende Schwenkbewegung der beiden Lichtmodule 18, 30 überträgt. Durch die synchron und phasengleich erfolgende Bewegung der beiden Lichtmodule 18, 30 ändert sich die Form der von beiden gemeinsam erzeugten Lichtverteilung vorteilhafterweise nicht. Lediglich die Amplitude der Schwenkbewegung fällt etwas geringer aus als die Amplitude, die sich bei einer vollständig synchron und phasengleichen Bewegung der beiden Stellstangen 24, 38 ergibt. Es wird insbesondere vermieden, dass beide Linearschrittmotoren 22, 32 sich gegenseitig behindern.

Figur 4 veranschaulicht den beschriebenen Fall einer Abweichung zwischen den Stellbewegungen der beiden Linearschrittmotoren 22, 32. Die unterschiedlichen Stellbewegungen führen zu einer Schrägstellung der Koppelstange 34.

Abhängig vom Verhältnis des Abstandes der beiden äußeren Drehpunkte 34.1, 34.2 der Koppelstange 34 zum Wegunterschied zwischen den Stellbewegungen der beiden Linear-Schritt-Motoren 22, 32 ist der Winkel der Schrägstellung unterschiedlich groß. Der Winkel der Schrägstellung ergibt sich als Betrag der Abweichung des Winkels zwischen Koppelstange 34 und Summenstellstange 36 von dem Wert, den dieser Winkel bei identischen Stellbewegungen beider Linearschrittmotoren 22, 32 besitzt (hier: 90°). Diese Schrägstellung führt zu einer radialen Belastung der Stellstangen 24, 38 der Linearschrittmotoren 22, 32.

Zur Vermeidung einer solchen radialen Belastung sieht eine Ausgestaltung der Erfindung vor, dass die Koppelstange 34 wenigstens eine Längenänderungen ausgleichende Lagerung aufweist.

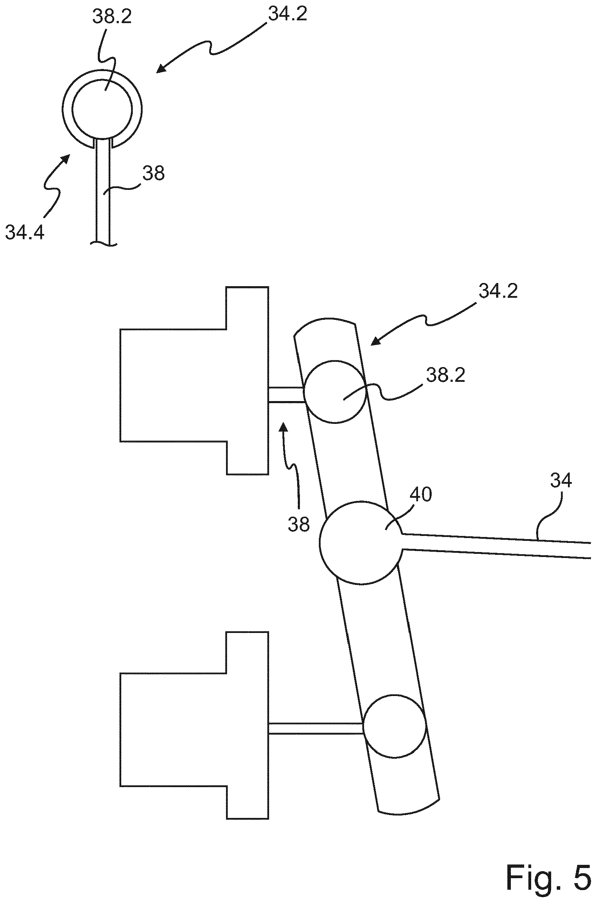

Figur 5 zeigt eine Ausgestaltung einer solchen Längenänderungen ausgleichenden Lagerung für ein Ende 34.2 der Koppelstange 34 und der zugehörigen Stellstange 38. Das andere Ende der Koppelstange und das Ende der diesem anderen Ende der Koppelstange zugehörigen Stellstange ist bevorzugt entsprechend (also bis auf notwendige Abweichungen genauso) ausgestaltet. Das Ende der Stellstange 38.2 weist eine Verdickung auf. Das zugehörige Ende 34.2 der Koppelstange ist hohlzylindrisch mit einem in Axialrichtung verlaufenden Schlitz 34.4 ausgeführt. Der quer zu der Axialrichtung liegende hohlzylindrische Querschnitt ist seiner Form und seinen Abmessungen nach als Negativ zu der äußeren Form der Verdickung mit einem kleinen Spiel ausgeführt, so dass die Verdickung in der Koppelstange 38 axial beweglich ist. Die Verdickungen an den lichtmodulseitigen Enden 24.2, 38.2 der Stellstangen sind bevorzugt kugelförmig ausgeführt, wobei der von der Verdickung/Kugel übrige Teil der Stellstange 24, 38 durch den Schlitz 34.4 hindurchgreift.

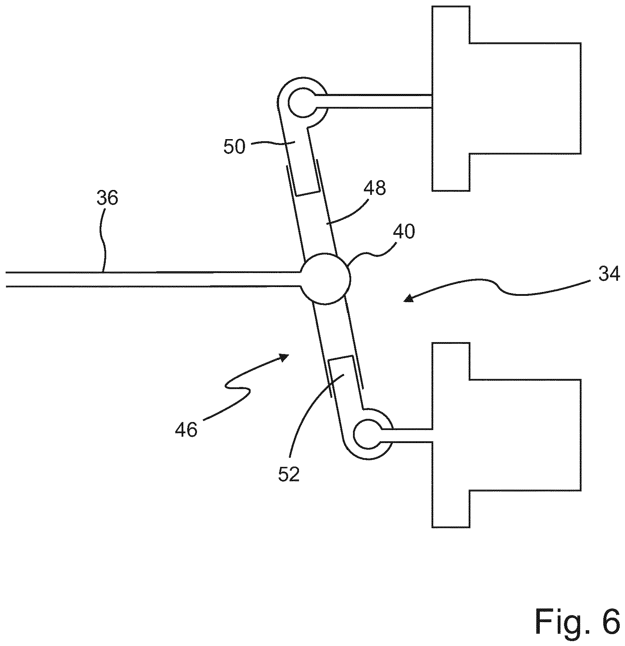

Fig. 6 zeigt eine alternative Ausgestaltung einer Längenänderungen ausgleichenden Lagerung, die ein Schiebestück aufweist. Das Schiebestück besteht aus einer zylindrischen Hülse 48 und in die Hülse ragenden Kolben 50, 52, deren äußere Querschnittsform und Abmessungen komplementär zur inneren Querschnittsform und den inneren Abmessungen der Hülse 48 sind. Hülse 48 und Kolben 50,52 sind daher gegeneinander axial verschiebbar. Hülse 48 und Kolben 50, 52 bilden zusammen eine Ausgestaltung einer Koppelstange 34.

Bei der dargestellten Ausgestaltung ist das Drehlager 40, mit dem die Summenstellstange 36 an das die Koppelstange 34 angekoppelt ist, an der Hülse 48 befestigt. Je ein Kolben 50, 52 ist starr mit je einem der Drehlager für die Stellstangenenden verbunden. In einer alternativen Ausgestaltung ist je eine Hülse mit je einem der Drehlager für die Stellstangenenden verbunden, und das Drehlager, mit dem die Summenstellstange an die Koppelstange angekoppelt ist, ist zentral an einem zwei Enden aufweisenden Doppelkolben befestigt, von dem je ein Ende in je eine der Hülsen hineinragt.

Durch das Schiebestück 46 können Längenänderungen, d.h. Änderungen des Abstandes zwischen den lichtmodulseitigen Enden der Koppelstange 34 problemlos ausgeglichen werden. Die an den beiden Enden der Koppelstange 34 angeordneten Drehlager können dann auf der Koppelstange 34, bzw. an jeweils einem Ende der Koppelstange 34, in Bezug auf die Koppelstange 34 ortsfest angeordnet sein.

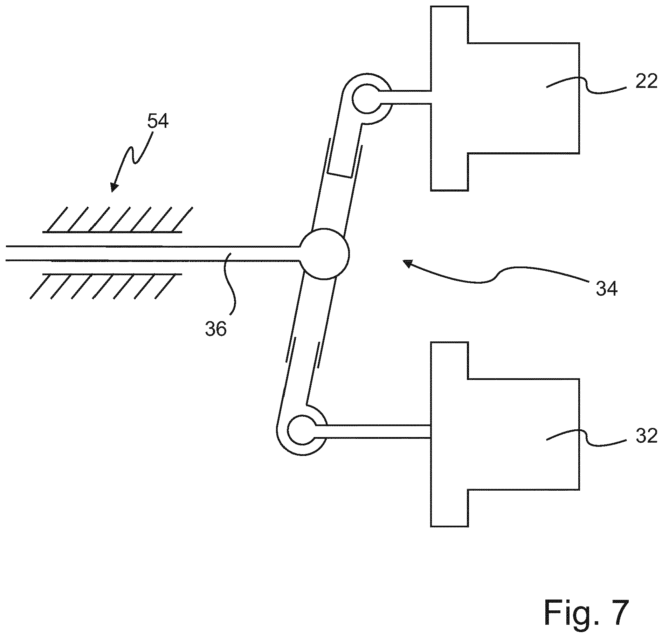

Figur 7 zeigt eine Ausgestaltung, bei der die Summenstellstange 36 durch eine letztlich mit einem Rahmen oder dem Gehäuse 12 des Scheinwerfers 10 starr verbundene Linearführung 54 geführt wird, die nur axiale Bewegungen der Summenstellstange 36 erlaubt. Diese Ausgestaltung ist vorteilhafterweise dazu geeignet, eine unerwünschte Schrägstellung der Summenstellstange 36 zu verhindern, die sonst als Folge einer Schrägstellung der Koppelstange 34 auftreten könnte.

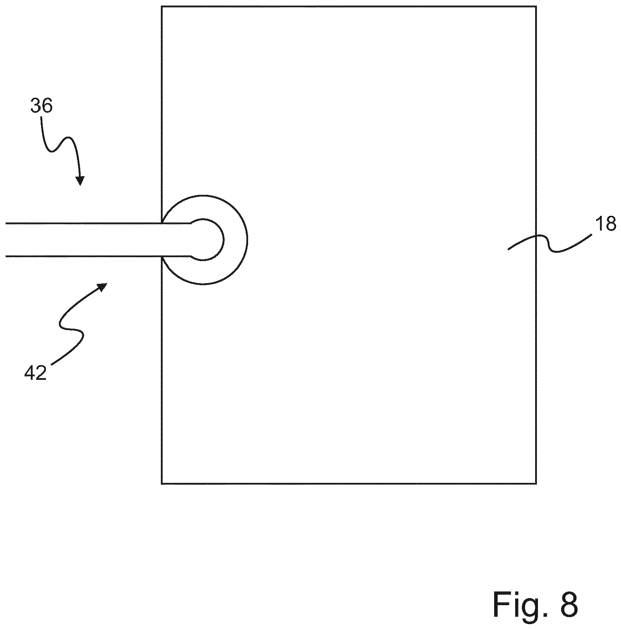

Figur 8 zeigt eine Alternative, bei der das lichtmodulseitige Ende der Summenstellstange 36 mit genau einem schwenkbaren Lichtmodul 18 verbunden ist.

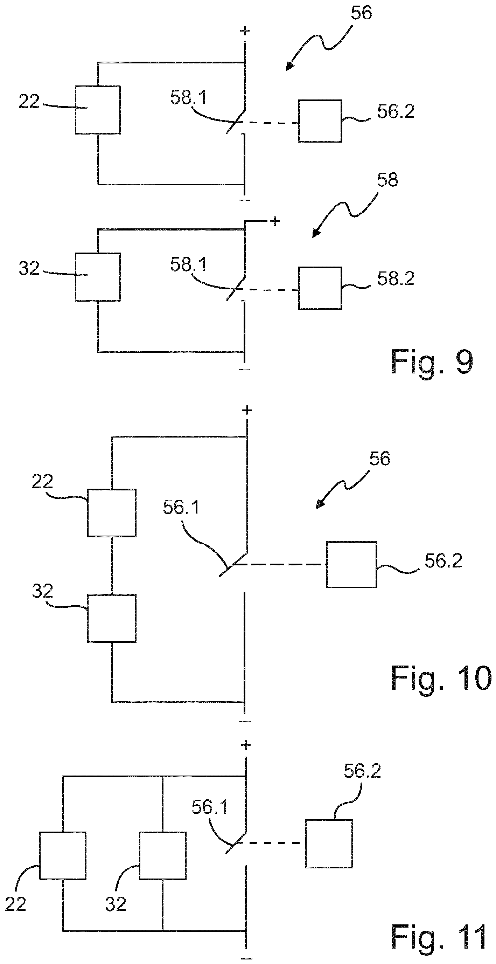

Figur 9 zeigt eine elektrische Beschaltung von n = 2 Linearschrittmotortreiberschaltungen 56, 58, die dazu eingerichtet ist, die Linearschrittmotoren 22, 32 mit denselben elektrischen Signalen anzusteuern. Die Zahl n der Linearschrittmotoren 22, 32 kann auch größer als 2 sein. Die n Linearschrittmotoren 22, 32 werden jeweils einzeln oder gruppenweise von jeweils einer schrittmotorindividuellen Linearschrittmotortreiberschaltung 56, 58 angesteuert. In diesem Fall müssen die Linearschrittmotortreiberschaltungen synchron und phasengleich arbeiten. Jede Linearschrittmotortreiberschaltung weist einen Endstufenschalter 56.1, 58.1 und eine Steuerelektronik 56.2, 58.2 auf.

Figur 10 zeigt eine Ausgestaltung, bei der n mit n größer oder gleich 2 Linearschrittmotoren 22, 32 von nur einer Linearschrittmotortreiberschaltung 56.1 angesteuert werden, wobei die n Linearschrittmotoren 22, 32 elektrisch in Reihe geschaltet sind.

Figur 11 zeigt eine Ausgestaltung, bei der n mit n größer oder gleich 2 Linearschrittmotoren 22, 32 von nur einer Linearschrittmotortreiberschaltung angesteuert werden, wobei die n Linearschrittmotoren 22, 32 elektrisch parallel geschaltet sind.

## Patentansprüche

1. Kraftfahrzeugscheinwerfer (10) mit wenigstens einem Lichtmodul (18, 30), das um eine Drehachse (20) schwenkbar im Kraftfahrzeugscheinwerfer (10) gelagert ist, wobei der Kraftfahrzeugscheinwerfer (10) einen ersten Linearschrittmotor (22), einen zweiten Linearschrittmotor (32) und eine Koppelstange (34) aufweist, die ein erstes Ende (34.1) und ein zweites Ende (34.2) aufweist, wobei der erste Linearschrittmotor (22) eine erste Stellstange (24) aufweist, die ein schrittmotorseitiges erstes Ende (24.1) und ein lichtmodulseitiges erstes Ende (24.2) aufweist, wobei der zweite Linearschrittmotor (32) eine zweite Stellstange (38)aufweist, die ein schrittmotorseitiges zweites Ende (38.1) und ein lichtmodulseitiges zweites Ende (38.2) aufweist und wobei der Kraftfahrzeugscheinwerfer (10) eine Summenstellstange (36) aufweist, wobei das erste lichtmodulseitige Ende (24.1) der ersten Stellstange (24) um eine Achse senkrecht zur Drehachse (20) des Lichtmoduls (18, 30) drehbeweglich mit dem ersten Ende (34.1) der Koppelstange verbunden ist und wobei das zweite lichtmodulseitige Ende (38.1) der zweiten Stellstange um eine Achse senkrecht zur Drehachse (20) des Lichtmoduls (18, 30) drehbeweglich mit dem zweiten Ende (34.2) der Koppelstange (34) verbunden ist, **dadurch gekennzeichnet, dass** die Koppelstange (34) ein zwischen dem ersten Ende (34.1) und dem zweiten Ende (34.2) liegendes Drehlager (40) aufweist, wobei ein koppelstangenseitiges Ende der Summenstellstange (36) um eine Achse senkrecht zur Drehachse (20) des Lichtmoduls (18, 30) drehbeweglich mit dem Drehlager (40) der Koppelstange (34) verbunden ist und wobei ein lichtmodulseitiges Ende (36.2) der Summenstellstange (36) mit dem Lichtmodul (18, 30) verbunden ist.

2. Kraftfahrzeugscheinwerfer (10) nach Anspruch 1, **dadurch gekennzeichnet, dass** das lichtmodulseitige Ende (36.2) der Summenstellstange (36) mit genau einem schwenkbaren Lichtmodul (18) verbunden ist.

3. Kraftfahrzeugscheinwerfer (10) nach Anspruch 1, **dadurch gekennzeichnet, dass** das lichtmodulseitige Ende (36.2) der Summenstellstange (36) mit wenigstens zwei Lichtmodulen (18, 30) verbunden ist.

4. Kraftfahrzeugscheinwerfer (10) nach Anspruch 2, **dadurch gekennzeichnet, dass** das lichtmodulseitige Ende (36.2) der Summenstellstange (36) mit wenigstens drei Lichtmodulen verbunden ist.

5. Kraftfahrzeugscheinwerfer (10) nach einem der vorhergehenden Ansprüche, **dadurch gekennzeichnet, dass** die Koppelstange (34) eine Längenänderungen ausgleichende Lagerung aufweist.

6. Kraftfahrzeugscheinwerfer (10) nach dem vorhergehenden Anspruch, **dadurch gekennzeichnet, dass** die Längenänderungen ausgleichende Lagerung ein Schiebestück (46) aufweist.

7. Kraftfahrzeugscheinwerfer (10) nach einem der vorhergehenden Ansprüche, **dadurch gekennzeichnet, dass** eine elektrische Beschaltung der Linearschrittmotoren (22, 32) dazu eingerichtet sind, die Linearschrittmotoren (22, 32) mit denselben elektrischen Signalen anzusteuern.

8. Kraftfahrzeugscheinwerfer (10) nach einem der vorhergehenden Ansprüche, **dadurch gekennzeichnet, dass** die Summenstellstange (36) in einer Linearführung (54) in Längsrichtung beweglich gehalten wird.

9. Kraftfahrzeugscheinwerfer (10) nach einem der vorhergehenden Ansprüche, **dadurch gekennzeichnet, dass** jeder der zwei Linearschrittmotoren (22,32) von jeweils einem schrittmotorindividuellen Linearschrittmotortreiber (56, 58) angesteuert wird.

10. Kraftfahrzeugscheinwerfer (10) nach einem der Ansprüche 1 bis 8, **dadurch gekennzeichnet, dass** die zwei Linearschrittmotoren (22, 32) von nur einem Linearschrittmotortreiber angesteuert werden, wobei die zwei Linearschrittmotoren elektrisch in Reihe oder parallel geschaltet sind.

## Claims

1. Motor vehicle headlamp (10) with at least one light module (18, 20) that can pivot around a rotational axis (20) in the motor vehicle headlamp (10), whereby the motor vehicle headlamp (10) comprises a first linear pulse motor (22), a second linear pulse motor (32), and a coupling rod (34) comprising a first end (34.1) and a second end (34.2), whereby the first linear pulse motor (22) comprises a first positioning rod (24) comprising a first end (24.1) on the linear pulse motor side and a first end (24.2) on the light module side, whereby the second linear pulse motor (32) comprises a second positioning rod (38) comprising a second end (38.1) on the linear pulse motor side and a second end (38.2) on the light module side, and whereby the motor vehicle headlamp (10) comprises a cumulative positioning rod (36), whereby the first end (24.1) of the first positioning rod (24) on the light module side is connected to the first end (34.1) of the coupling rod such that it can rotate around an axis perpendicular to the rotational axis (20) of the light module (18, 30), and whereby the second end (38.1) of the second positioning rod on the light module side is connected to the second end (34.2) of the coupling rod (34) such that it can rotate around an axis perpendicular to the rotational axis (20) of the light module (18, 30), **characterised in that** the coupling rod (34) comprises a rotational bearing (40) positioned between the first end (34.1) and the second end (34.2), whereby an end of the cumulative positioning rod (36) on the coupling rod side is connected with the rotational bearing (40) of the coupling rod (34) around an axis perpendicular to the rotational axis (20) of the light module (18, 30), and whereby an end (36.2) of the cumulative positioning rod (36) on the light module side is connected to the light module (18, 30).

2. Motor vehicle headlamp (10) as per claim 1, **characterised in that** the end (36.2) of the cumulative positioning rod (36) on the light module side is connected with precisely one swivelling light module (18).

3. Motor vehicle headlamp (10) as per claim 1, **characterised in that** the end (36.2) of the cumulative positioning rod (36) on the light module side is connected with at least two light modules (18, 30).

4. Motor vehicle headlamp (10) as per claim 2, **characterised in that** the end (36.2) of the cumulative positioning rod (36) on the light module side is connected with at least three light modules.

5. Motor vehicle headlamp (10) as per one of the preceding claims, **characterised in that** the coupling rod (34) comprises a bearing that compensates for length changes.

6. Motor vehicle headlamp (10) as per the preceding claim, **characterised in that** the bearing that compensates for length changes comprises a spline end (46).

7. Motor vehicle headlamp (10) as per one of the preceding claims, **characterised in that** an electrical wiring of the linear pulse motors (22, 32) is configured to actuate the linear pulse motors (22, 32) with the same electrical signals.

8. Motor vehicle headlamp (10) as per one of the preceding claims, **characterised in that** the cumulative positioning rod (36) is kept longitudinally mobile in a linear track (54) .

9. Motor vehicle headlamp (10) as per one of the preceding claims, **characterised in that** each of the two linear pulse motors (22, 32) is actuated by a pulse motor-specific linear pulse motor driver (56, 58).

10. Motor vehicle headlamp (10) as per one of the claims 1 through 8, **characterised in that** the two linear pulse motors (22, 32) are actuated by only one linear pulse motor driver, whereby the two linear pulse motors are electrically activated in succession or parallel to one another.

## Revendications

1. Phare de véhicule automobile (10) comprenant au moins un module d'éclairage (18, 30) qui est monté dans le phare de véhicule automobile (10) de manière à pouvoir pivoter autour d'un axe de rotation (20), le phare de véhicule automobile (10) comprenant un premier moteur pas-à-pas linéaire (22), un second moteur pas-à-pas linéaire (32) et une tige de couplage (34) qui comprend une première extrémité (34.1) et une seconde extrémité (34.2), le premier moteur pas-à-pas linéaire (22) comprenant une première tige de réglage (24) qui comporte une première extrémité côté moteur pas-à-pas (24.1) et une première extrémité côté module d'éclairage (24.2), le second moteur pas-à-pas linéaire (32) comprenant une seconde tige de réglage (38) qui comporte une seconde extrémité côté moteur pas-à-pas (38.1) et une seconde extrémité côté module d'éclairage (38.2), et le phare de véhicule automobile (10) présentant une tige de réglage de sommation (36), la première extrémité côté module d'éclairage (24.1) de la première tige de réglage (24) étant reliée de manière rotative à la première extrémité (34.1) de la tige de couplage autour d'un axe perpendiculaire à l'axe de rotation (20) du module d'éclairage (18, 30), et la seconde extrémité côté module d'éclairage (38.1) de la seconde tige de réglage étant reliée de manière rotative à la seconde extrémité (34.2) de la tige de couplage (34) autour d'un axe perpendiculaire à l'axe de rotation (20) du module d'éclairage (18, 30), **caractérisé en ce que** la tige de couplage (34) comprend un palier de pivotement (40) situé entre la première extrémité (34.1) et la seconde extrémité (34.2), une extrémité côté tige de couplage de la tige de réglage de sommation (36) étant reliée de manière rotative au palier pivotant (40) de la tige de couplage (34) autour d'un axe perpendiculaire à l'axe de rotation (20) du module d'éclairage (18, 30), et une extrémité côté module d'éclairage (36.2) de la tige de réglage de sommation (36) étant reliée au module d'éclairage (18, 30) .

2. Phare de véhicule automobile (10) selon la revendication 1, **caractérisé en ce que** l'extrémité côté module d'éclairage (36.2) de la tige de réglage de sommation (36) est reliée à précisément un module d'éclairage pivotant (18).

3. Phare de véhicule automobile (10) selon la revendication 1, **caractérisé en ce que** l'extrémité côté module d'éclairage (36.2) de la tige de réglage de sommation (36) est reliée à au moins deux modules d'éclairage (18, 30).

4. Phare de véhicule automobile (10) selon la revendication 2, **caractérisé en ce que** l'extrémité côté module d'éclairage (36.2) de la tige de réglage de sommation (36) est reliée à au moins trois modules d'éclairage.

5. Phare de véhicule automobile (10) selon l'une quelconque des revendications précédentes, **caractérisé en ce que** la tige de couplage (34) comprend un palier compensant les variations de longueur.

6. Phare de véhicule automobile (10) selon la revendication précédente, **caractérisé en ce que** le palier compensant les variations de longueur comprend un coulisseau (46).

7. Phare de véhicule automobile (10) selon l'une quelconque des revendications précédentes, **caractérisé en ce qu'**un circuit électrique des moteurs pas-à-pas linéaires (22, 32) est configuré pour entraîner les moteurs pas-à-pas linéaires (22, 32) avec les mêmes signaux électriques.

8. Phare de véhicule automobile (10) selon l'une quelconque des revendications précédentes, **caractérisé en ce que** la tige de réglage de sommation (36) est maintenue mobile dans la direction longitudinale dans un guide linéaire (54).

9. Phare de véhicule automobile (10) selon l'une quelconque des revendications précédentes, **caractérisé en ce que** chacun des deux moteurs pas-à-pas linéaires (22, 32) est commandé par un circuit d'attaque de moteur pas-à-pas linéaire individuel pour chaque moteur pas-à-pas linéaire.

10. Phare de véhicule automobile (10) selon l'une quelconque des revendications 1 à 8, **caractérisé en ce que** les deux moteurs pas-à-pas linéaires (22, 32) ne sont commandés que par un seul circuit d'attaque de moteur pas-à-pas linéaire, les deux moteurs pas-à-pas linéaires étant montés électriquement en série ou en parallèle.
